# EUROPÄISCHE PATENTSCHRIFT

(11) **EP 3 356 079 B1**
(45) Veröffentlichungstag und Bekanntmachung des Hinweises auf die Patenterteilung: **04.09.2019**
(21) Anmeldenummer: 16766904.3
(22) Anmeldetag: 12.09.2016
(51) Int. Cl.: B23K 37/04, F16B 5/12, B62D 27/00

(54) **KAROSSERIEBAUTEIL MIT TABBINGLASCHE ZUR VORFIXIERUNG**
BODY COMPONENT HAVING A TAB ELEMENT FOR PRE-FASTENING
PIÈCE DE CARROSSERIE POURVUE D'UNE LANGUETTE DE POSITIONNEMENT POUR LA FIXATION PRÉALABLE

(30) Priorität: 30.09.2015 DE 102015218817
(43) Veröffentlichungstag der Anmeldung: 08.08.2018
(73) Patentinhaber: Bayerische Motoren Werke Aktiengesellschaft, 80809 München (DE)
(72) Erfinder: BACHNER, Josef, 84048 Mainburg (DE); BUSLER, Stephan, 94436 Ruhstorf (DE); BÖER, Christian, 81543 Muenchen (DE); PFEFFER, Franz, 94269 Rinchnach (DE); WALCH, Johannes, 85375 Neufahrn (DE)
(86) Internationale Anmeldenummer: PCT/EP2016/071432
(87) Internationale Veröffentlichungsnummer: WO 2017/055062

(56) Entgegenhaltungen:
- EP-A2- 0 147 910
- DE-A1-102009 048 168
- US-A- 5 199 156

## Beschreibung

Die Erfindung betrifft ein Karosseriebauteil mit einer an seiner Seitenkante ausgebildeten Vorfixiereinrichtung, über die das Karosseriebauteil an einem Fahrzeugrahmen vorfixierbar ist. Die US 5,199,156 offenbart ein Karosseriebauteil nach dem Oberbegriff des Anspruchs 1.

Im Automobilbau ist bekannt, Karosseriebauteile an Fahrzeugrahmenteilen, beispielsweise der Bodengruppe, in einen Zwischenzustand der Rohkarosserie vorzufixieren. Hierzu werden sogenannte Tabbinglaschen verwendet, welche die Zusammenbauten vor der Schweißstation an dem bis dahin aufgebauten Zustand der Rohkarosserie vorpositionieren und fixieren. Wenn die vorzufixierenden Bauteile in die gewünschte Anlageposition gebracht wurden, werden sie durch die Tabbinglaschen in einer separaten Station aneinander befestigt, indem die an dem einen Bauteil ausgebildeten Laschen um 60 - 180° und um die Kante des angrenzenden Bauteils gebogen werden.

Die Tabbinglaschen umgreifen dabei die Kante und halten die Bauteile in Position. Da Tabbinglaschen an allen Seiten vorgesehen werden können, kann eine Relativbewegung der Bauteile zueinander in alle Richtungen verhindert werden.

Auch sind Varianten der Tabbinglasche mit einem "S"-Schlag möglich. "S-Schlag" bedeutet, dass die Tabbinglasche zweifach gebogen wird, um durch eine Öffnung an dem zu fixierenden Bauteil geführt (erste Biegung) und anschließend an das Bauteil zu Anlage gebracht zu werden (zweite Biegung in Gegenrichtung). Bei dieser Variante sind vorgelagerte Biegeoperationen von 90° bzw. -90° erforderlich.

Grundsätzlich ist nachteilig, dass bei höher und höchstfesten Materialien, vor allem warmumgeformten Stählen, sowie bei hohen Blechstärken größer 1,2mm die Gefahr besteht, dass die Tabbinglaschen beim Biegen brechen und eine Fixierung und Positionierung der Zusammenbauten am Rohbau nicht mehr möglich ist.

Die Problematik besteht auch bei warmumgeformten Bauteilen, deren Tabbinglaschen als ungehärtete Bereiche ausgeführt sind.

Der Erfindung liegt deshalb die Aufgabe zugrunde, ein Karosseriebauteil bereit zu stellen, das eine Vorfixiereinrichtung mit Tabbinglaschen aufweist, die weniger stark belastet werden.

Diese Aufgabe wird durch die Merkmalskombination gemäß Patentanspruch 1 gelöst.

Erfindungsgemäß wird ein Karosseriebauteil mit einer sich in einer Längsrichtung erstreckenden Seitenkante vorgeschlagen, an der mindestens eine Vorfixiereinrichtung ausgebildet ist, die einen gegenüber der Seitenkante in einer Querrichtung vorstehenden Abschnitt aufweist, an dem eine zur Seitenkante weisende Lasche (Tabbinglasche) ausgebildet ist. Die Lasche ist in einer Vertikalrichtung senkrecht zur Längsrichtung biegbar und ausgebildet, eine Rahmenkante eines Fahrzeugrahmenteils vorfixierend hintergreifen zu können.

Durch die Anordnung der Lasche in dem vorstehenden Abschnitt und die rückwärtsgerichtete Erstreckung zur Seitenkante des Karosseriebauteils sowie der Rahmenkante des Fahrzeugrahmenteils wird erreicht, dass der nötige Biegewinkel deutliche reduziert wird. Es reicht bereits aus, die Lasche nur so weit zu verbiegen, dass diese bei einer Relativbewegung des Karosseriebauteils gegenüber dem Fahrzeugrahmenteil einen Anschlag bildet.

In einer vorteilhaften Ausführung ist vorgesehen, dass die Lasche zumindest abschnittsweise in Vertikalrichtung gegenüber einer Ebene parallel zu einer Oberfläche des Karosseriebauteils und des vorstehenden Abschnitts um einen Winkel von 15 - 40°, vorzugsweise 15 - 30° gebogen ist. Die gewinkelte Ausbildung lässt die Lasche schräg in Richtung der Seitenkanten des Karosseriebauteils und Fahrzeugrahmenteils zulaufen, wobei die Lasche bei einer Relativbewegung der beiden Bauteile an die Rahmenkante des Fahrzeugrahmenteils zur Anlage kommt und eine relative Weiterbewegung verhindert. Die geringe Biegung in nur eine Richtung reicht demzufolge aus, um den Hintergriff bei der Relativbewegung sicherzustellen und den Anschlag zu bilden.

In einer günstigen Ausführungsform der Erfindung ist der vorstehende Abschnitt ringförmig und weist eine Öffnung auf, in die die Lasche hineinragt. Die Lasche wird vorzugsweise einteilig an dem ringförmigen vorstehenden Abschnitt ausgebildet. Auch der vorstehende Abschnitt ist vorzugsweise einteilig an dem Karosseriebauteil ausgebildet.

Zur Gewährleistung einer ausreichenden Stabilität wird in einer Ausführung vorgesehen, dass die Lasche in Querrichtung eine Breite aufweist, die 20 - 70% einer Breite des vorstehenden Abschnitts in Querrichtung entspricht.

Die Laschendicke in Vertikalrichtung ist vorzugsweise größer oder gleich 1,2 mm.

Bezüglich der Form der Lasche ist ferner günstig, ihr freies Ende abgerundet auszubilden. Das freie Ende ist in Richtung der Seitenkante des Karosseriebauteils und Fahrzeugrahmenteils gerichtet. Bei einer Relativbewegung können sich die Lasche und die Bauteile berühren. Eine gerundete Form ist deshalb bevorzugt.

Ferner ist in einer Ausführungsvariante vorgesehen, dass ein Abstand in Querrichtung zwischen der Seitenkante und dem freien Ende der Lasche mindestens 2 mm beträgt. Dieser Abstand ermöglicht ein Anlegen des Karosseriebauteils und Fahrzeugrahmenteils ohne ständige Vorfixierung. Vielmehr greift die Lasche nur hinter die Rahmenkante des Fahrzeugrahmenteils, wenn sich die Bauteile relativ zueinander bewegen, beispielsweise beim Transport zur Schweißstation. Für die sonst lose Vorfixierung wird ein Spiel der Bauteile zueinander gewährleistet.

Auch ist vorteilhaft, wenn die Lasche aus demselben Material wie das Karosseriebauteil gebildet ist. Da vorzugsweise warm- oder kaltumgeformte Stähle für das Karosseriebauteil eingesetzt werden, erhält die Lasche eine ausreichende Festigkeit.

Die Erfindung umfasst auch das Verfahren zur beweglichen Vorfixierung des vorstehend beschriebenen Karosseriebauteils an dem Fahrzeugrahmenteil, wobei das Karosseriebauteil an den Fahrzeugrahmenteil angelegt wird, so dass die Seitenkante des Karosseriebauteils parallel zur Rahmenkante verläuft und der vorstehende Abschnitt von der Rahmenkante in Querrichtung beabstandet ist, wobei die Lasche in Richtung der Rahmenkante weist und zumindest abschnittsweise in Vertikalrichtung gegenüber einer Ebene parallel zu einer Oberfläche des Karosseriebauteils und des vorstehenden Abschnitts um einen Winkel von 15 - 40° gebogen ist, so dass die Lasche bei einer Relativbewegung zwischen dem Karosseriebauteil und dem Fahrzeugrahmen in Querrichtung die Rahmenkante hintergreift.

Bei dem Verfahren wird vorzugsweise ferner vorgesehen, dass das freie Ende der Lasche beim Anlegen des Karosseriebauteils an den Fahrzeugrahmen von dem Fahrzeugrahmen beabstandet ist. Dieser Abstand ermöglicht das oben beschriebene Anlegen des Karosseriebauteils und Fahrzeugrahmenteils ohne ständige Vorfixierung und den Hintergriff der Lasche hinter die Seitenkante des Fahrzeugrahmenteils nur in dem Fall, wenn sich die Bauteile relativ zueinander bewegen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt.

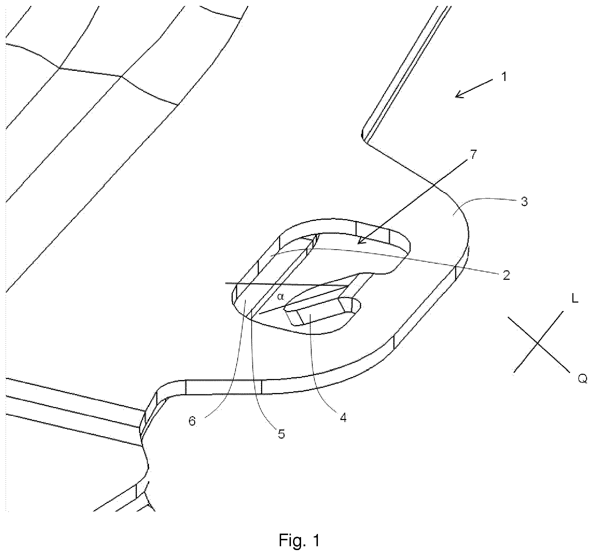

- Fig. 1: zeigt eine perspektivische Ansicht einer Vorfixiereinrichtung an einem Karosseriebauteil.

In Figur 1 ist ein Ausführungsbeispiel einer Vorfixiereinrichtung an einem Karosseriebauteil 1 gezeigt, wobei das Karosseriebauteil 1 an einem Fahrzeugrahmenteil 6 zur Anlage gebracht ist. Die sich in Längsrichtung L erstreckende Seitenkante 2 des Karosserieteils 1 und die Rahmenkante 5 des Fahrzeugrahmenteils 6 verlaufen parallel und im Wesentlichen bündig.

An dem Karosseriebauteil 1 erstreckt sich einteilig in Querrichtung Q ein ringförmiger über die Seitenkante 2 vorstehender Abschnitt 3, an dem die zur Seitenkante 2 weisende Lasche 4 ausgebildet ist. In dem vorstehenden Abschnitt 3 ist hierzu eine Öffnung 7 vorgesehen. Die Lasche 4 ist in der gezeigten Ausführung in Vertikalrichtung gegenüber der Ebene parallel zur Oberfläche des Karosseriebauteils 1 und des vorstehenden Abschnitts 3 um einen Winkel α von 30° gebogen. Die Biegung wird beispielsweise durch pneumatische Stempelwerkzeuge oder andere Biegevorrichtungen erzielt. Die Lasche 4 ist in Querrichtung Q in der gezeigten beispielhaften Ausführung 10mm lang und in Längsrichtung L 5 mm breit. In Vertikalrichtung weist sie eine Dicke von 1,6 mm auf. Ihr zur Seitenkante 2 weisendes freies Ende ist abgerundet.

In Querrichtung Q ist zwischen der Seitenkante 2 und dem freien Ende der Lasche 4 ein Abstand vorgesehen. Die Vorfixiereinrichtung fixiert deshalb in diesem Zustand nicht arretierend, sondern bietet die Möglichkeit des Hintergriffs der Lasche 4 hinter die Rahmenkante 5 bei einer Relativbewegung des Karosseriebauteils 1 gegenüber dem Fahrzeugrahmenteil 6 in Querrichtung.

An dem Karosseriebauteil 1 sind entsprechende vorstehende Abschnitte 3 mit Laschen 4 in Längsrichtung beabstandet wiederholt angeordnet, um die Last auf mehrere Laschen 4 zu verteilen. Zusätzlich können auch entsprechende Vorfixiereinrichtungen entlang einer senkrecht zur Seitenkante 2 verlaufenden Kante vorgesehen werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können auch mehrere Laschen nebeneinander angeordnet werden.

## Patentansprüche

1. Karosseriebauteil mit einer sich in einer Längsrichtung (L) erstreckenden Seitenkante (2), an der mindestens eine Vorfixiereinrichtung ausgebildet ist, **dadurch gekennzeichnet, dass** die Vorfixiereinrichtung einen gegenüber der Seitenkante (2) in einer Querrichtung (Q) vorstehenden Abschnitt (3) aufweist, an dem eine zur Seitenkante (2) weisende Lasche (4) ausgebildet ist, die in einer Vertikalrichtung senkrecht zur Längsrichtung (L) biegbar und ausgebildet ist, eine Rahmenkante (5) eines Fahrzeugrahmenteils (6) vorfixierend hintergreifen zu können.

2. Karosseriebauteil nach Anspruch 1, **dadurch gekennzeichnet, dass** die Lasche (4) zumindest abschnittsweise in Vertikalrichtung gegenüber einer Ebene parallel zu einer Oberfläche des Karosseriebauteils (1) und des vorstehenden Abschnitts (3) um einen Winkel (α) von 15 - 40° gebogen ist.

3. Karosseriebauteil nach Anspruch 1 oder 2, **dadurch gekennzeichnet, dass** der vorstehende Abschnitt eine Öffnung (7) aufweist, in die die Lasche (4) hineinragt.

4. Karosseriebauteil nach zumindest einem der vorigen Ansprüche, **dadurch gekennzeichnet, dass** die Lasche (4) in Querrichtung (Q) eine Breite aufweist, die 20 - 70% einer Breite des vorstehenden Abschnitts (3) in Querrichtung (Q) entspricht.

5. Karosseriebauteil nach zumindest einem der vorigen Ansprüche, **dadurch gekennzeichnet, dass** der vorstehende Abschnitt (3) und die Lasche (4) einteilig an dem Karosseriebauteil (1) ausgebildet sind.

6. Karosseriebauteil nach zumindest einem der vorigen Ansprüche, **dadurch gekennzeichnet, dass** ein freies Ende der Lasche (4) abgerundet ist.

7. Karosseriebauteil nach zumindest einem der vorigen Ansprüche, **dadurch gekennzeichnet, dass** ein Abstand in Querrichtung (Q) zwischen der Seitenkante (2) und einem/dem freien Ende der Lasche (4) mindestens 2 mm beträgt.

8. Karosseriebauteil nach zumindest einem der vorigen Ansprüche, **dadurch gekennzeichnet, dass** die Lasche (4) aus demselben Material wie das Karosseriebauteil (1) gebildet ist.

9. Verfahren zur beweglichen Vorfixierung des Karosseriebauteils (1) nach zumindest einem der vorigen Ansprüche an dem Fahrzeugrahmenteil (6), wobei das Karosseriebauteil (1) an den Fahrzeugrahmenteil (6) angelegt wird, so dass die Seitenkante (2) des Karosseriebauteils (1) parallel zur Rahmenkante (5) verläuft und der vorstehende Abschnitt (3) von der Rahmenkante (5) in Querrichtung beabstandet ist, wobei die Lasche (4) in Richtung der Rahmenkante (5) weist und zumindest abschnittsweise in Vertikalrichtung gegenüber einer Ebene parallel zu einer Oberfläche des Karosseriebauteils (1) und des vorstehenden Abschnitts (3) um einen Winkel (α) von 15 - 40° gebogen ist, so dass die Lasche (4) bei einer Relativbewegung zwischen dem Karosseriebauteil (1) und dem Fahrzeugrahmenteil (6) in Querrichtung (Q) die Rahmenkante (5) hintergreift.

10. Verfahren nach dem vorigen Anspruch, **dadurch gekennzeichnet, dass** ein freies Ende der Lasche (4) beim Anlegen des Karosseriebauteils (1) an den Fahrzeugrahmenteil (6) von dem Fahrzeugrahmenteil beabstandet ist.

## Claims

1. A body component with a lateral edge (2) extending in a longitudinal direction (L), on which edge at least one pre-fixing means is formed, **characterised in that** the pre-fixing means has a portion (3) projecting in a transverse direction (Q) relative to the lateral edge (2), on which portion a tab (4) pointing to the lateral edge (2) is formed which is bendable in a vertical direction perpendicular to the longitudinal direction (L) and is designed to be able to engage behind a frame edge (5) of a vehicle frame part (6) in pre-fixing manner.

2. A body component according to Claim 1, **characterised in that** the tab (4), at least in portions, is bent in the vertical direction relative to a plane parallel to a surface of the body component (1) and of the projecting portion (3) by an angle (α) of 15 - 40°.

3. A body component according to Claim 1 or 2, **characterised in that** the projecting portion has an opening (7) into which the tab (4) protrudes.

4. A body component according to at least one of the preceding claims, **characterised in that** the tab (4) in the transverse direction (Q) has a width which corresponds to 20 - 70% of a width of the projecting portion (3) in the transverse direction (Q).

5. A body component according to at least one of the preceding claims, **characterised in that** the projecting portion (3) and the tab (4) are designed in one part on the body component (1).

6. A body component according to at least one of the preceding claims, **characterised in that** a free end of the tab (4) is rounded off.

7. A body component according to at least one of the preceding claims, **characterised in that** a distance in the transverse direction (Q) between the lateral edge (2) and a/the free end of the tab (4) is at least 2 mm.

8. A body component according to at least one of the preceding claims, **characterised in that** the tab (4) is formed from the same material as the body component (1).

9. A method for movably pre-fixing the body component (1) according to at least one of the preceding claims to the vehicle frame part (6), wherein the body component (1) is placed on the vehicle frame part (6) so that the lateral edge (2) of the body component (1) runs parallel to the frame edge (5) and the projecting portion (3) is spaced apart from the frame edge (5) in the transverse direction, wherein the tab (4) points in the direction of the frame edge (5) and, at least in portions, is bent in the vertical direction relative to a plane parallel to a surface of the body component (1) and of the projecting portion (3) by an angle (α) of 15 - 40°, so that the tab (4) upon a relative movement between the body component (1) and the vehicle frame part (6) in the transverse direction (Q) engages behind the frame edge (5).

10. A method according to the preceding claim, **characterised in that** a free end of the tab (4) upon the body component (1) being placed on the vehicle frame part (6) is spaced apart from the vehicle frame part.

## Revendications

1. Composant de carrosserie ayant un bord latéral (2) s'étendant dans une direction longitudinale (L) sur lequel est fixé au moins un dispositif de fixation préalable,
**caractérisé en ce que**
l'élément de fixation préalable comprend un segment (3) faisant saillie par rapport au bord latéral (2) dans une direction transversale (Q) sur lequel et formé une languette (4) pointant vers le bord latéral (2) qui est flexible en direction verticale perpendiculairement à la direction longitudinale (L) et est formée de façon à pouvoir venir en prise pour permettre une fixation préalable à l'arrière d'un bord (5) d'un composant du châssis de véhicule (6).

2. Composant de carrosserie conforme à la revendication 1,
**caractérisé en ce que**
la languette (4) est repliée angulairement au moins par segments en direction verticale par rapport à un plan parallèle à une surface du composant de carrosserie (1) et du segment faisant saillie (3) d'un angle (α) de 15 à 40°.

3. Composant de carrosserie conforme à la revendication 1 ou 2, **caractérisé en ce que**
le segment faisant saillie comporte une ouverture (7) dans laquelle pénètre la languette (4).

4. Composant de carrosserie conforme à au moins une revendication précédente,
**caractérisé en ce que**
la languette (4) a dans la direction transversale (Q) une largeur qui correspond à 20 à 70% de la largeur du segment faisant saillie (3) dans la direction transversale (Q).

5. Composant de carrosserie conforme à au moins une des revendications précédentes,
**caractérisé en ce que**
le segment faisant saillie (3) et la languette (4) sont réalisés en une seule pièce sur le composant de carrosserie (1).

6. Composant de carrosserie conforme à au moins l'une des revendications précédentes,
**caractérisé en ce que**
l'extrémité libre de la languette (4) est arrondie.

7. Composant de carrosserie conforme à au moins l'une des revendications précédentes,
**caractérisé en ce que**
la distance dans la direction transversale (Q) entre le bord latéral (2) et une/l'extrémité libre de la languette (4) est égale à au moins 2mm.

8. Composant de carrosserie conforme à au moins l'une des revendications précédentes,
**caractérisé en ce que**
la languette (4) est réalisée dans le même matériau que l'élément de carrosserie (1).

9. Procédé de fixation préalable mobile d'une composant de carrosserie (1) conforme à au moins l'une des revendications précédentes,
sur un élément de châssis d'un véhicule (6) selon lequel le composant de carrosserie (1) est appliqué sur l'élément de châssis du véhicule (6) de sorte que le bord latéral (2) du composant de carrosserie (1) s'étende parallèlement au bord du châssis (5) et que le segment faisant saillie (3) soit situé à distance du bord du châssis (5) en direction transversale, la languette (4) pointant dans la direction du bord du châssis (5), et étant repliée angulairement au moins par segments en direction verticale par rapport à un plan parallèle à une surface du composant de carrosserie (1) et du segment formant saillie (3) d'un angle (α) de 15 à 40°, de sorte que, en présence d'un déplacement relatif entre le composant de carrosserie (1) et l'élément du châssis du véhicule (6) dans la direction transversale (Q), la languette (4) vienne en prise à l'arrière du bord du châssis (5).

10. Procédé conforme à la revendication précédente,
**caractérisé en ce que**
lors de l'application du composant de carrosserie (1) sur l'élément du châssis du véhicule (6) une extrémité libre de la languette (4) est située à distance de l'élément de châssis du véhicule.
